# FASCICULE DE BREVET EUROPEEN

(11) **EP 3 620 725 B1**
(45) Date de publication et mention de la délivrance du brevet: **22.09.2021**
(21) Numéro de dépôt: 18000725.4
(22) Date de dépôt: 07.09.2018
(51) Int. Cl.: F24H 1/16, A01M 21/04, F24H 1/43, F24H 9/20

(54) **DISPOSITIF DE CHAUFFAGE D'EAU POUR APPAREIL DE DÉSHERBAGE MULTIPOSTE APTE À FOURNIR UNE TEMPÉRATURE CONSTANTE EN SORTIE DE BUSE DE 95 À 99°C**
VORRICHTUNG ZUM ERHITZEN VON WASSER FÜR EIN UNKRAUTVERNICHTUNGSGERÄT MIT MEHREREN STATIONEN, DIE IN DER LAGE IST, EINE KONSTANTE DÜSENAUSGANGSTEMPERATUR VON 95 99 °C ZU ERZEUGEN
WATER HEATING DEVICE FOR CLUSTER WEEDING APPARATUS DESIGNED TO PROVIDE A CONSTANT TEMPERATURE AT THE NOZZLE OUTLET OF 95 TO 99°C

(43) Date de publication de la demande: 11.03.2020
(73) Titulaire: Oeliatec, 35133 Saint Jacques de la Lande (FR)
(72) Inventeur: BARRE, Jean Pierre, 35136 Saint Jacques de la lande (FR)

(56) Documents cités:
- WO-A1-94/26102
- DE-A1- 3 727 291
- FR-A3- 3 022 431
- JP-A- H01 124 346

## Description

L'invention concerne un dispositif de chauffage d'eau destiné à un appareil de désherbage mono ou multiposte, apte à fournir une température d'eau basse pression de façon régulée et constante en sortie de buse de 95 à 99° Celsius.

### Etat des connaissances :

### En matière d'équipements et dispositifs existants :

IL existe deux grandes familles de machines de désherbage thermique en usage : celle où la production de chaleur qui agit directement sur la plante (bruleurs à flamme, infrarouge, action du soleil...), et celle qui fait appel à un média (eau avec ou sans adjuvant, vapeur).

Dans la famille des appareils de désherbage faisant appel à un média (eau avec ou sans adjuvant, vapeur), on distingue celles de désherbage eau chaude, et celle qui rejettent de la vapeur d'eau, avec d'éventuels additifs pour limiter la consommation d'eau.

Dans la famille des dispositifs consistant à ajouter un ou plusieurs adjuvants (amidon, et autres éléments organiques appelés à retenir les calories) qui ont pour fonction de maintenir la chaleur en sortie de lance, la contrainte de cette technologie réside dans l'emploi d'adjuvants couteux, tandis que les surfaces traitées ne sont plus praticables immédiatement après le passage de l'application (sols sales et glissants).

Du point de vue des procédés de traitement de désherbage eau chaude ou vapeur, l'état des sachant se détermine au regard de deux domaines que sont :
- les conditions physiques d'action de l'eau chaude sur les végétaux,
- les équipements et dispositifs connus.

### Relatif aux conditions d'exercice de la fonction de désherbage par l'usage de l'eau chaude :

Une loi de physique est qu'au-delà de 100° Celsius, la gouttelette d'eau commence à se transformer en vapeur, si bien que celle-ci se disperse. A l'état vapeur à pression atmosphérique, celle-ci se condense en refroidissant. Dans le cas d'un traitement de désherbage, s'il est possible de maitriser la température de l'eau aux fins qu'elle se constitue en gouttelettes dont il convient de déterminer la taille et la température pour optimiser l'efficacité du traitement de désherbage (ce qui indique que la température soit inférieure à 100°C°), cette maitrise n'est pas possible dans le cas d'une vapeur d'eau qui se condense sans que l'on puisse maitriser les principes de cette condensation (les variables de temps et de températures étant impactées considérablement par les conditions atmosphériques qui environnent le traitement). Les fabricants de machine à vapeur d'eau tentent de réduire cette contrainte, notamment en introduisant des dispositifs de couvercle constituant une chambre close sur la vapeur d'eau projetée aux fins de mieux contrôler les paramètres atmosphériques (environnement météorologique). Toutefois cette technologie est contraignante en raison de l'obligation qui est faite de poser le couvercle sur le sol pour constituer une chambre de mise en pression de la vapeur d'eau. Ainsi ce type de technologie qui maintien le traitement en vapeur d'eau, présente trois inconvénients :
- de temps de traitement important en raison de la mise sous couvercle de la partie à traiter, qui réduit ainsi le rendement général des machines (en rapport : surface/temps de traitement),
- les gouttelettes produites en phase vapeur ont une taille inférieure à 0,5mm, ce qui indique que ce faible volume d'eau impacte négativement leur pouvoir calorifique, la gouttelette refroidi très rapidement et est vite impacté thermiquement par son environnement,
- ne permet pas de pénétrer les racines et radicelles en ce que la vapeur d'eau maintenue sous couvercle se condense simultanément qu'elle perd sa température, ce qui indique des températures à la fois non maitrisées dans la phase de condensation (en raison de la température du sol par exemple et des éléments atmosphériques environnants) qui ne sont pas assez importantes pour agir sur les racines.

En matière de dispositifs de machines de désherbage eau chaude faisant appel au principe de projection d'eau, c'est-à-dire dans le cas où l'on disperse de l'eau à température inférieure à 100°C, l'état des connaissances se caractérise en ce que la projection d'eau n'a pas pour objet de dimensionner la goutte d'eau, mais uniquement de déverser de l'eau chaude sur une surface à traiter. La projection d'eau est donc abondante et provoque une consommation très importante qui handicape le traitement en raison de la nécessité de ravitaillement en eau. De plus nombre d'équipements dotés de cette technologie nécessitent l'usage d'eau de ville (hors les brevets OEB 13364002 et FR 1201913 déposés par le présent demandeur). Les conséquences négatives de ce type de traitement sont importantes du point de vue environnemental, tant en raison de fortes consommations d'eau, que de la nécessité à chauffer une masse d'eau plus importante, ce qui indique une dépense énergétique en rapport. D'autre part sur le plan biologique il a été constaté que le déversement d'une masse d'eau importante sur un végétal provoque la destruction des racines et radicelles dès lors que la température est supérieure ou égale à 92°C, mais ne permet pas la destruction des graines. En revanche la présence d'une quantité d'eau importante provoque le réveil des graines qui entament ainsi leur germination (ce que les professionnels appellent des « faux semis »). Ainsi le déversement d'une quantité d'eau abondante va engendrer la nécessité de multiplier les traitements de désherbage en raison de la germination qu'elle a initiée. Pour que la germination des graines ne soient pas la conséquence d'un traitement de désherbage eau chaude, il convient que l'eau déversée soit à température égale ou supérieure à 95°Celsius sans qu'elle de transforme en vapeur. Du point de vue physique, la technologie de traitement par eau ne dimensionnant pas la taille des gouttes d'eau, provoque la formation de gouttes d'eau de taille unitaire supérieure à 2 mm, ce qui indique que les buses de déversement de l'eau vont laisser des espaces vides importants entre les gouttes déversées, si bien que :
- Qu'il faudra être insistant sur la quantité d'eau déversée de façon à pénétrer le sol sur toute sa surface de traitement,
- La température des gouttelettes sera maintenue (en raison du volume des gouttes qui constituent un réservoir calorique), mais un désagrément sera engendré au-dessus de la surface de traitement en ce que les espaces où les gouttes de sont pas présentes engendrent un différentiel important de température qui perturbe l'homogénéité de la température sur l'ensemble de la surface traitée.

Dans ces différents domaines d'application (traitement de désherbage vapeur d'eau ou eau chaude), il nous parait utile de citer les brevets : EP1764165, EP1695620, US2011/0253803, US2010/0115280, GB2485457, US2009/0114210, FR 1201913 qui sont tous relatifs à des appareils de traitement de surface et de désherbage eau chaude ou vapeur. L'ensemble de ces brevets présentent des inventions du domaine mécanique, et ne se basent aucunement sur les principes de procédés physiques de formation d'eau ou de vapeur.

Le brevet FR 1201913 déposé par l'actuel demandeur a décrit un dispositif de machine à désherber professionnelle multifonction (désherbage basse pression, lavage haute pression, hydro-curage et arrosage) qui intégrait une régulation constante de température de l'eau selon un asservissement qui faisait varier en continue la température de l'eau produite par la chaudière et le débit d'eau. Ce brevet s'inscrit parfaitement dans la suite des autres brevets cités ci-dessus, en ce qu'il revendique des caractéristiques de configuration mécanique et d'asservissement, sans que soient posées les conditions physiques qui permettent un traitement efficient, si bien que ce brevet se résume à des choix d'équipement. Le même déposant a réalisé une évolution du brevet FR 1201913 qui a fait l'objet d'un certificat d'utilité N° FR1401413 se distinguant en ce que le principe de régulation thermique ne fait plus l'objet d'une modification constante de la température de chaudière, la régulation thermique agissant uniquement sur le débit de l'eau pour parvenir à diffuser l'eau à température souhaitée.

C'est aux fins de lever les inconvénients liés à la maitrise du traitement de l'eau, en vue d'optimiser le désherbage eau chaude dans les domaines de la consommation de l'eau, des dépenses énergétiques, ainsi que dans l'efficacité du traitement pour limiter le nombre de passage, que le présent brevet est destiné.

### Présentation de l'invention

Les appareils de désherbage eau chaude dotés de chaudières thermiques sont tous équipés des composants suivants :
- une pompe à eau (g) (« PE ») qui a pour fonction de faire circuler l'eau sur l'ensemble du réseau hydraulique,
- une chaudière (e) qui contient souvent en son sein la pompe à fioul (b) (« PF ») nécessaire à alimenter en carburant la dite chaudière, et le moteur (c) (« M ») qui sert à alimenter à la fois une turbine d'apport d'air à la combustion du carburant (I) ainsi que la pompe à fioul(b) (cette dernière ayant un apport en carburant à débit constant), une sonde de température (f) en sortie de chaudière connectée à un dispositif de régulation thermostatique agissant selon un principe de fonctionnement ouvert/fermé sans possibilité à fournir des modes de fonctionnement intermédiaires, ce qui conduit à des dégradations de températures non maitrisées,
- un ou des moyens de diffusion d'eau chaude (m) dont la technologie n'est pas étudiée pour optimiser la taille des gouttelettes aux fins de rendre plus efficace le traitement.

Le dispositif objet de la présente invention, a les mêmes fonctions de chauffage et de diffusion d'eau pour appareil de désherbage eau chaude que celles désignées ci-dessus. Les appareils qui le reçoivent sont également constitués des mêmes composants. Le dispositif se distingue dans ses objectifs pour fournir de l'eau basse pression à température permanente régulée variant de 95 à 99 ° Celsius en sortie de buse (i) placée sur la lance ou la rampe de diffusion (m) (quel que soit le moyen de diffusion), ainsi que par la formation de gouttelettes d'eau d'une taille maitrisée variant de 0,5 à 1,5 mm en sortie de buse (i). Le dispositif de la présente invention comprend:
- Un asservissement propre à gérer la température de la chaudière selon le principe d'un débit d'eau contrôlé en permanence à température constante de 120° Celsius en sortie de chaudière (k), composé : d'un automate (j) doté d'un programme de pilotage de l'appareil de désherbage pour satisfaire à un procédé particulier de commande permanente dudit appareil, un flussostat (a) relié à l'automate (j) indiquant la présence de circulation d'eau, une sonde de température en sortie de chaudière (f) reliée à l'automate indiquant en permanence la température d'eau en sortie de chaudière (k), d'un variateur PWM (d) qui retranscrit à tout instant et immédiatement les commandes de l'automate programmé (j) vers la pompe à carburant (b) aux fins de faire varier le débit de carburant selon le programme, et enfin d'un variateur PWM (h) qui reçoit l'information de l'automate programmé (j) et pilote le débit d'eau à la pompe à eau (g),
- Un débit d'alimentation en carburant géré en permanence par l'asservissement, débit de carburant variant selon le débit d'eau souhaité (qui dépend du nombre d'utilisateurs, du type des traitements...) pour obtenir une température constante de 120° Celsius en sortie de chaudière,
- Un débit d'eau variable assurant une production d'eau chaude à température de 120° constante à plus ou moins un degré Celsius en sortie de chaudière (k), doté d'une buse dont l'orifice est compris entre un diamètre de 4,5 et 5 mm, le tout pour satisfaire à la formation de gouttelettes d'eau en sortie de buse d'une taille variant entre 0,5 et 1,5mm, tandis que la température de l'eau à ce même endroit est constante variant entre 95 et 99° Celsius.

La différence de température intervenant entre celle constatée en sortie de chaudière (k) (120°C) et celle en sortie de buse (i) (95 à 99°C) s'explique du fait qu'au-delà de 100 degrés, la masse volumique de l'eau est supérieure à celle constatée à moins de 100°C, ce qui indique une mise sous pression qui pousse l'eau vers la buse. Lorsque celle-ci sort de la buse, elle est immédiatement modifiée pour être sous pression atmosphérique, ce qui engendre immédiatement des déperditions caloriques. C'est pourquoi l'invention établie une température de 120°Celsisus en sortie de chaudière pour compenser cette perte. En revanche à l'hypothèse d'une eau à 130°C en sortie de chaudière, les mêmes phénomènes physiques vont se produire avec pour conséquence une plus grande montée en pression, ce qui entrainera à la fois une diffusion à 100°C et plus, ce qui aura pour conséquence de diffuser des gouttelettes d'eau trop fines (inférieures à 0,5 mm) qui perdront très vite leurs capacités caloriques et entraveront le traitement de désherbage. Inversement des températures en sortie de chaudières inférieures à 120C° vont engendrer des gouttelettes de taille supérieure à 1,5mm, ce qui contrarie le traitement pour les raisons invoquées plus haut.
Relatif aux conséquences de l'éloignement de la buse (i) sur le moyen de diffusion par rapport à la sortie de chaudière (e), il est utile de rappeler que l'eau contenue dans les moyens de diffusion intermédiaires à ces deux composants (tuyaux principalement) est sous pression, et qu'elle se transporte très rapidement de la sortie de chaudière vers la buse, de telle sorte que ce déplacement instantané empêche la dégradation calorique due à des variations climatiques.

Le débit de la pompe à eau varie selon le nombre de postes de diffusion fournis par la machine dans lequel est installé le dispositif, et selon l'usage auquel se destine l'appareil de désherbage, attendu par exemple que dans le domaine du désherbage urbain le débit d'eau nécessaire au traitement est très inférieur à celui nécessaire dans le domaine du désherbage agricole, et que pour satisfaire à ces traitements il s'agira de dimensionner la chaudière à l'effet recherché. Ainsi le débit de la pompe à eau et la puissance de la chaudière sont des variables d'ajustement à l'objet de traitement recherché, tandis que la donnée constante est de produire une eau chaude à 120°Celsius en sortie de chaudière aux fins que celle-ci soit diffusée entre 95 et 99° Celsisus en sortie de buse en sortie du moyen de diffusion. De plus il s'agira que la taille des gouttelettes soit située entre 0,5 et 1,5 mm. En dessous de 95°Celsius l'eau chaude diffusée développera des caractéristiques défavorables au traitement de désherbage par la germination des graines en dormance (avec des gouttelettes de taille supérieure à 1,5mm), tandis qu'au-delà de 99°Celsius l'eau se transforme en vapeur d'eau qui se diffuse dans l'atmosphère et retarde le traitement des sols. Dans ces conditions, les gouttelettes d'eau sont de taille inférieure à 0,5mm et perdent très vite les calories qu'elles contiennent et contreviennent au traitement des sols.
Selon le procédé de fonctionnement du dispositif établi par l'asservissement, celui-ci se caractérise par plusieurs phases d'opérations :
- Au démarrage de l'appareil doté du dispositif, l'asservissement contenu dans le programme de l'automate (j) contrôle d'abord via un flussostat (a) qu'il y a bien une circulation d'un fluide avant l'entrée de la chaudière. Il autorise alors le démarrage de la chaudière par l'intermédiaire d'une consigne au variateur PWM de la pompe à carburant (d) ; l'utilisateur ayant auparavant pris soin d'indiquer au programme l'usage souhaité (nombre d'utilisateurs, type de traitement). Le variateur PWM de la pompe à carburant actionne alors la pompe à carburant (b) par l'intermédiaire du moteur électrique (c) selon la consigne reçue de l'automate programmé (j),
- Lorsque la température relevée en sortie de chaudière est à 120°C à plus ou moins 1 degré, celle-ci est communiquée à l'asservissement par l'intermédiaire de la sonde de température (f), asservissement qui modifie le débit de la pompe à eau (g) grâce au variateur PWM de la pompe à eau (h). A ce moment, l'utilisateur démarre sa phase de traitement de désherbage,
- Durant toute la phase de traitement, et de façon permanente la sonde de température(f) envoie à chaque instant à l'automate programmé (j) le degré de température en sortie de chaudière, l'asservissement intervenant alors immédiatement pour réguler la vitesse de débit de la pompe à eau (g) par l'intermédiaire du variateur de commande PWM (h).

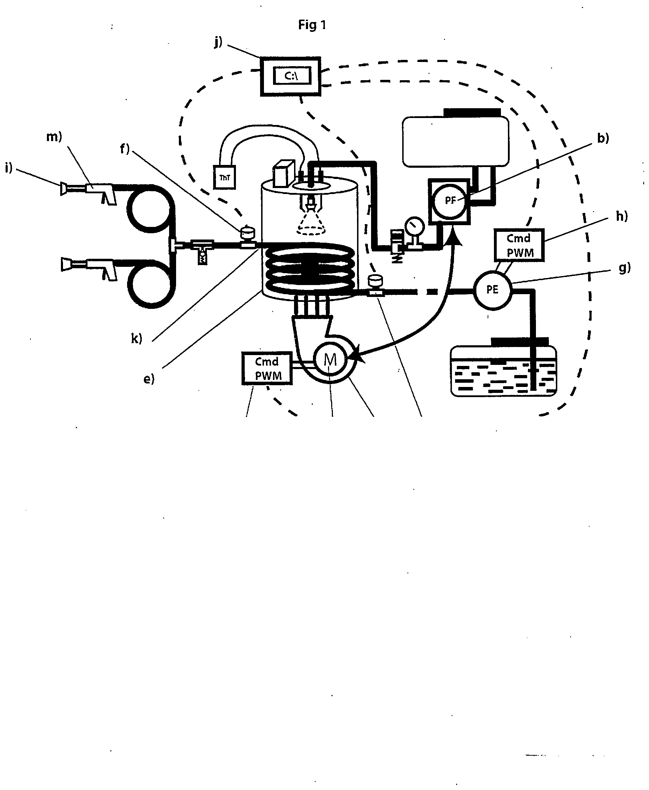

### Figure 1 : Vue générale des composants d'une machine à désherber recevant le dispositif

### Glossaire

a-flussostat
b-pompe à carburant
c-moteur électrique
d-variateur PWM pompe à carburant
e-chaudière
f-sonde de température
g-pompe à eau
h-variateur PWM pompe à eau
i- buse en sortie de lance
j- automate programmé
k- eau en sortie de chaudière
l- turbine d'apport d'air à la combustion du carburant
m- moyen de diffusion d'eau chaude

## Revendications

1. Dispositif de chauffage d'eau destiné à un appareil de désherbage mono ou multiposte, comprenant une chaudière (k), une pompe à carburant (b), une buse (i) et une lance ou rampe de diffusion (m), le dispositif étant apte à fournir :
a. de l'eau basse pression à une température régulée et constante de 95 à 99° Celsius en sortie de buse (i) placée sur la lance ou rampe de diffusion (m),
b. ainsi que par la formation de gouttelettes d'eau d'une taille maitrisée variant de 0,5 à 1,5 mm en sortie de buse (i),
le dispositif comprenant :
- Un asservissement propre à gérer la température de la chaudière selon le principe d'un débit d'eau contrôlé en permanence à température constante de 120° Celsius en sortie de chaudière (k), composé de :
∘ un automate (j) doté d'un programme de pilotage de l'appareil de désherbage pour satisfaire à un procédé particulier de commande permanente dudit appareil de désherbage,
∘ un flussostat (a) relié à l'automate (j) indiquant la présence de circulation d'eau,
∘ une sonde de température en sortie de chaudière (f) reliée à l'automate indiquant en permanence la température d'eau en sortie de chaudière,
o un variateur PWM (d) qui retranscrit à tout instant et immédiatement les commandes de l'automate programmé (j) vers la pompe à carburant (b) aux fins de faire varier le débit de carburant selon le programme,
∘ un variateur PWM (h) qui reçoit l'information de l'automate programmé (j) et pilote le débit d'eau à la pompe à eau (g),
- Un débit d'alimentation en carburant géré en permanence par l'asservissement, débit de carburant variant selon le débit d'eau souhaité pour obtenir une température constante de 120° Celsius en sortie de chaudière,
- Un débit d'eau variable géré par l'asservissement assurant une production d'eau chaude à température de 120° constante à plus ou moins un degré Celsius en sortie de chaudière (k), doté d'une buse (i) dont l'orifice est compris entre un diamètre de 4,5 et 5 mm, le tout pour satisfaire à la formation de gouttelettes d'eau en sortie de buse (i) d'une taille variant entre 0,5 et 1,5mm, tandis que la température de l'eau à ce même endroit est constante variant entre 95 et 99° Celsius.

2. Procédé d'asservissement du dispositif de chauffage d'eau destiné à un appareil de désherbage mono ou multiposte selon la revendication 1, **caractérisé par** plusieurs phases d'opérations :
- Au démarrage, l'asservissement contenu dans le programme de l'automate (j) contrôle d'abord via un flussostat (a) qu'il y a bien une circulation d'un fluide avant l'entrée de la chaudière ; il autorise alors le démarrage de la chaudière par l'intermédiaire d'une consigne au variateur PWM de la pompe à carburant (d), l'utilisateur ayant auparavant pris soin d'indiquer au programme l'usage souhaité ; Le variateur PWM de la pompe à carburant actionne alors la pompe à carburant (b) par l'intermédiaire du moteur" électrique (c) selon la consigne reçue de l'automate programmé (j),
- Lorsque la température relevée en sortie de chaudière est à 120°C à plus ou moins 1 degré, celle-ci est communiquée à l'asservissement par l'intermédiaire de la sonde de température (f), asservissement qui modifie le débit de la pompe à eau (g) grâce au variateur PWM de la pompe à eau (h) ; à ce moment l'utilisateur démarre sa phase de traitement de désherbage,
- Durant toute la phase de traitement, et de façon permanente la sonde de température(f) envoie à chaque instant à l'automate programmé (j) le degré de température en sortie de chaudière, l'asservissement intervenant alors immédiatement pour réguler la vitesse de débit de la pompe à eau (g) par l'intermédiaire du variateur de commande PWM (h).

## Patentansprüche

1. Wasserheizung für Ein- oder Mehrschicht-Unkrautvernichtungsgeräte, bestehend aus einem Kessel (k), einer Kraftstoffpumpe (b), einer Düse (i) und einer Lanze oder einer Diffusionsrampe (m), wobei das Gerät geeignet ist,
a. Niederdruckwasser bei einer geregelten und konstanten Temperatur von 95 bis 99° Celsius beim Austritt aus der Düse (i) auf der Lanze oder der Diffusionsrampe (m),
b. sowie durch die Bildung von Wassertröpfchen mit einer gedämpften Größe, die zwischen 0,5 mm und 1,5 mm am Ausgang des Düsenausgangs schwanken (i),
die Vorrichtung, die folgendes umfasst:
- Eine Vorrichtung, die geeignet ist, die Temperatur des Kessels nach dem Prinzip eines kontinuierlich kontrollierten Wasserdurchflusses bei konstanter Temperatur von 120° Celsius im Kesselausgang (k) zu steuern, bestehend aus:
∘ ein Automat (j) mit einem Programm zur Steuerung des Unkrautvernichtungsgeräts, um ein bestimmtes Verfahren zur permanenten Steuerung des Unkrautvernichtungsgeräts zu erfüllen;
∘ ein Flussostat (a) mit dem Automaten (j) verbunden ist, der das Vorhandensein von Wasserzirkulation anzeigt,
∘ eine Temperatursonde am Kesselausgang (f), die mit dem Automaten verbunden ist, der die Wassertemperatur im Kesselausgang ständig anzeigt;
∘ ein PWM (d) -D-Frequenzumrichter, der die Betätigungsbefehle des programmierten Automaten (j) sofort auf die Kraftstoffpumpe (b) umwandelt, um den Kraftstoffdurchsatz je nach Programm zu variieren;
∘ ein PWM(h) - Frequenzumrichter, der die Informationen aus dem programmierten Automaten (j) erhält und den Wasserdurchsatz an der Wasserpumpe (g) steuert;
- Ein kontinuierlicher Durchfluss des Kraftstoffverbrauchs, der von der Versklavung gesteuert wird und je nach gewünschtem Wasserdurchsatz variiert, um eine konstante Temperatur von 120° Celsius im Kesselaustritt zu erreichen;
- eine veränderliche Wassermenge, die durch Vorrichtung betrieben wird und eine konstante Warmwasserbereitung von 120° bei etwa einem Grad Celsius bei Kesselaustritt (k) gewährleistet, miteinerDüse (i) mit einer Öffnung zwischen 4,5 und 5 mm Durchmesser, Dies alles, um die Bildung von Wassertröpfchen am Düsenausgang (i) mit einer Größe zwischen-0,5 und 1,5 mmzubefriedigen, während die Wassertemperatur an diesem Ort konstant zwischen 95 und 99° Celsius liegt.

2. Verfahren zur Vorrichtung des Wasserheizgeräts für ein Unkrautvernichtungsgerät nach Anspruch 1, das durch mehrere Arbeitsschritte gekennzeichnet ist:
- Beim Anfahren kontrolliert die im Programm des Automaten enthaltene Vorrichtung zunächst über einen Flussostat (a), dass eine Flüssigkeit vor dem Eingang des Kessels zirkuliert; er erlaubt dann das Anfahren des Kessels über eine PWM- Frequenzumrichter -Schließfachangabe der Kraftstoffpumpe (d), wobei der Benutzer zuvor darauf geachtet hat, dem Programm den gewünschten Einsatz anzugeben; Der PWM- Frequenzumrichter der Kraftstoffpumpe betätigt dann die Kraftstoffpumpe (b) über den Elektromotor (c) entsprechend der Anweisung des programmierten Automaten (j),
- Liegt die am Kesselaustritt gemessene Temperatur bei 120 °C bei plus oder minus 1 Grad, so wird diese über die Temperatursonde (f) zur Vorrichtung mitgeteilt, die den Durchfluss der Wasserpumpe (g) durch den PWM- Frequenzumrichter der Wasserpumpe (h) verändert; zu diesem Zeitpunkt beginnt der Anwender seine Phase der Unkrautvernichtungsbehandlung,
- Während der gesamten Behandlungsphase und dauerhaft sendet die Temperatursonde (f) zu jedem Zeitpunkt an den programmierten Automaten (j) den Temperaturgrad am Kesselausgang, wobei die Unterlagerung sofort eingreift, um die Durchflussgeschwindigkeit der Wasserpumpe (g) über den Messgeber PWM (h) zu regulieren.

## Claims

1. Water heating device intended for a single or multi-station weeding device, comprising a boiler (k), a fuel pump (b), a nozzle (i) and a diffusion lance or ramp (m), the device being able to provide:
a. low pressure water at a regulated and constant temperature of 95 to 99 ° Celsius at the nozzle outlet (i) placed on the diffusion lance or ramp (m),
b. as well as by the formation of water droplets of a controlled size varying from 0.5 to 1.5 mm at the nozzle outlet (i),
the device comprising:
- A servo-control suitable for managing the temperature of the boiler according to the principle of a continuously controlled water flow at a constant temperature of 120 ° Celsius at the boiler outlet (k), composed of:
∘ an automaton (j) equipped with a controlling program of the weeding device to satisfy a particular process of permanent control of the weeding device,
∘ a flow switch (a) connected to the automaton (j) indicating the presence of water flow,
∘ a temperature sensor at the boiler outlet (f) connected to the controller permanently indicating the water temperature at the boiler outlet,
∘ a PWM variator (d) which immediately and at any time transcribes the commands from the programmed automaton (j) to the fuel pump (b) in order to vary the fuel flow according to the program,
∘ a PWM variator (h) which receives information from the programmed automaton (j) and controls the water flow to the water pump (g),
- A fuel supply flow permanently managed by the servo-control, fuel flow varying according to the desired water flow to obtain a constant temperature of 120 ° Celsius at the boiler outlet,
- A variable water flow managed by the servo-control ensuring hot water production at a constant temperature of 120 ° degree Celsius (plus or minus one degree) at the boiler outlet (k), equipped with a nozzle (i) whose the orifice is between a diameter of 4.5 and 5 mm, all to satisfy the formation of water droplets at the outlet of the nozzle (i) of a size varying between 0.5 and 1.5 mm, while the water temperature at this same place is constant varying between 95 and 99 ° Celsius.

2. A servo-control method of the water heating device intended for a single or multi-station weeding device according to claim 1, **characterized by** several operating phases:
- At start-up, the servo-control system contained in the controller program (j) first checks via a flow switch (a) that a fluid is flowing before entering the boiler; then it authorizes the starting of the boiler by means of an instruction to the PWM variator of the fuel pump (d), the user having previously taken care to indicate to the program the desired use; the PWM drive of the fuel pump then actuates the fuel pump (b) via the electric motor (c) according to the instruction received from the programmed automaton (j),
- When the temperature measured at the boiler outlet is at 120 ° C (plus or minus 1 degree), this is communicated to the servo-control system via the temperature probe (f), which modifies the flow rate of the water pump (g) thanks to the PWM variator of the water pump (h); at this time the user starts his weeding treatment phase,
- During the entire treatment phase, and permanently, the temperature probe (f) sends the temperature level at the boiler outlet to the programmed automaton (j), then the servo-control system intervenes immediately to regulate the flow rate of the water pump (g) via the PWM command variator (h).
